(19) Europäisches Patentamt
European Patent Office
Office européen des brevets

(11) **EP 0 968 559 B1**

(12) **EUROPÄISCHE PATENTSCHRIFT**

(45) Veröffentlichungstag und Bekanntmachung des Hinweises auf die Patenterteilung:
**24.06.2009 Patentblatt 2009/26**

(21) Anmeldenummer: **98943856.9**

(22) Anmeldetag: **06.08.1998**

(51) Int Cl.:
***H02J 5/00*** *(2006.01)*

(86) Internationale Anmeldenummer:
**PCT/EP1998/004904**

(87) Internationale Veröffentlichungsnummer:
**WO 1999/009634 (25.02.1999 Gazette 1999/08)**

(54) **VERFAHREN UND ANORDNUNG ZUR INDUKTIVEN ÜBERTRAGUNG ELEKTRISCHER LEISTUNG AUF MEHRERE BEWEGTE VERBRAUCHER**

METHOD AND DEVICE FOR INDUCTIVE TRANSMISSION OF ELECTRIC POWER TO A PLURALITY OF MOBILE CONSUMERS

PROCEDE ET DISPOSITIF POUR LE TRANSPORT INDUCTIF D'UNE PUISSANCE ELECTRIQUE A PLUSIEURS CHARGES MOBILES

(84) Benannte Vertragsstaaten:
**AT BE CH CY DE DK ES FI FR GB GR IE IT LI LU MC NL PT SE**

(30) Priorität: **18.08.1997 DE 19735624**

(43) Veröffentlichungstag der Anmeldung:
**05.01.2000 Patentblatt 2000/01**

(73) Patentinhaber: **Alstom Anlagen- und Automatisierungstechnik GmbH 60528 Frankfurt (Main) (DE)**

(72) Erfinder:
• **SEELIG, Anton**
**D-65439 Flörsheim (DE)**
• **SALAMA, Samir**
**D-13591 Berlin (DE)**
• **LINDIG, Erik**
**D-65795 Hattersheim (DE)**
• **KAUS, Eberhard**
**D-64569 Nauheim (DE)**

(74) Vertreter: **Schäfer, Wolfgang et al Dreiss Patentanwälte Postfach 10 37 62 70032 Stuttgart (DE)**

(56) Entgegenhaltungen:
WO-A-92/17929          DE-A- 4 236 340
DE-A- 4 446 779

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 0 968 559 B1

**Beschreibung**

Die Erfindung betrifft ein Verfahren und eine Anordnung zur induktiven Übertragung elektrischer Leistung auf mehrere bewegte Verbraucher nach dem Oberbegriff des Anspruchs 1, wie sie aus gattungsbildend zugrundegelegten Schrift WO-A1-96/20526 als bekannt hervorgeht.

In der Schrift WO-A1-96/20526 (entsprechend der DE 44 46 779) ist ein Verfahren zur induktiven Übertragung elektrischer Leistung aus einer Mittelfrequenzstromquelle mit einer Frequenz $f_M$ auf einen oder mehrere bewegte Verbraucher über eine langgestreckte Übertragungsleitung und den bewegten Verbrauchern zugeordneten induktiven Aufnehmern $IA_x$, $IA_Y$ mit nachgeschalteten Stromrichterstellgliedern zum Einstellen der von der Übertragungsleitung aufgenommenen und Pufferspeichern, an welche die bewegten Verbraucher angeschlossen sind, zugeführten Leistung $P_{LX}$, $P_{LY}$ offenbart, wobei die Übertragungsleitung von einer Stromquelle mit einem während der Leistungsübertragung in seinem Effektivwert konstanten Mittelfrequenzstrom ($I_L$) gespeist wird.

Aus der Anmeldung WO 92 /17929 A1 sowie der Veröffentlichung von A. W. Green und T. Boys, Power Electronics and Variable-Speed Drives, 26 - 28 October 1994, Conference Publication No. 399, C IEE, 1994, Seite 694 bis 698, welche die Erfindung entsprechend der WO 92 /17929 A1 beschreibt, ist ein Verfahren und eine Anordnung zur induktiven Übertragung elektrischer Leistung auf mehrere bewegte Verbraucher bekannt.

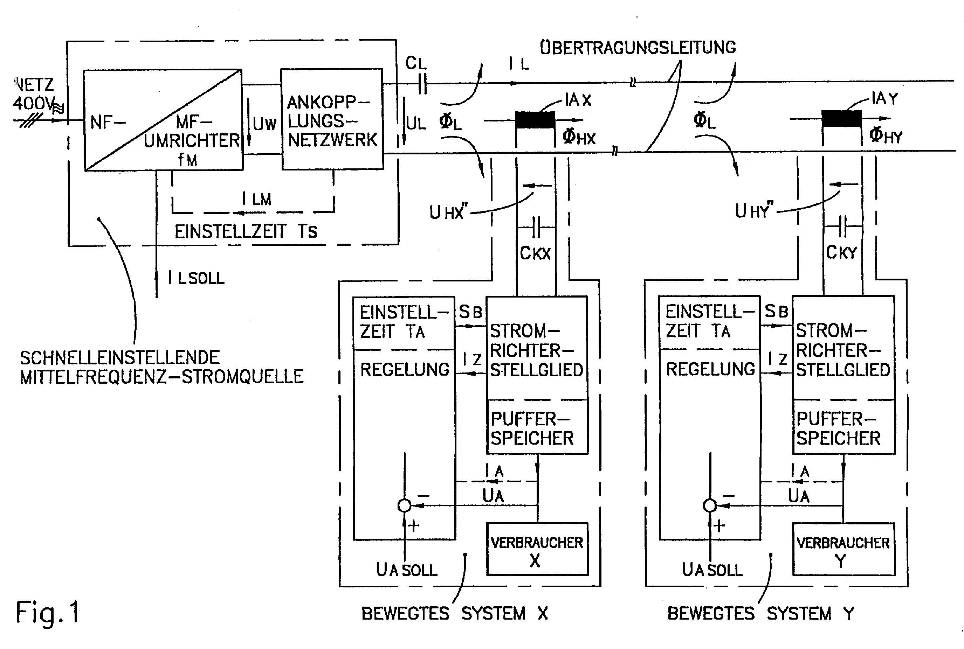

Hierbei wird, wie an Hand der Fig. bis 3 der Veröffentlichung beschrieben ist, der einem Drehstromnetz entnommene Strom gleichgerichtet und über ein aus den IGBTs S1,S2, den Dioden D1, D2 und einer Speicherdrossel $L_d$ bestehendem Stromstellglied einem aus den IGBTs S3 und S4 und den magnetisch gekoppelten Induktivitäten L2a und L2b bestehenden Wechselrichter zugeführt. Dieser erzeugt einen Mittelfrequenz-Wechselstrom von 10 kHz und speist diesen in einen aus einer Induktivität L1 und einer Kapazität C1 gebildeten Parallelschwingkreis ein. Die Induktivität L1 ist dabei die als langgestreckte Doppelleitung ausgebildete Übertragungsleitung eines Systems zur induktiven Übertragung elektrischer Leistung auf mehrere bewegte Verbraucher. Die bewegten Verbraucher sind über induktive Aufnehmer, wie in Fig. 8 der Veröffentlichung gezeigt, an die Übertragungsleitung magnetisch gekoppelt. Die Spule des induktiven Aufnehmers bildet, wie in den Fig. 1, 2 und 10 der Veröffentlichung dargestellt, wiederum mit einem Kondensator einen Parallelschwingkreis.

Der von der Übertragungsleitung auf den Parallelschwingkreis des bewegten Aufnehmers übertragene Strom wird entsprechend der Fig. 10 in einem als Aufnehmer-Controller bezeichneten Stromrichterstellglied gleichgerichtet, mit einer Drossel geglättet und je nach dem Leistungsbedarf der an den Controller angeschlossenen Verbraucher entweder dem die Ausgangsspannung $V_0$ des Controllers puffernden Kondensator zugeführt oder an diesem Pufferkondensator vorbeigeleitet. Die Entscheidung hierzu wird von dem Schmittrigger des Controllers getroffen, der die Ausgangsspannung $V_0$ mit einer entsprechenden Referenzspannung vergleicht und den IGBT sperrt, wenn die Ausgangspannung zu klein ist, so daß der Strom den Ausgangspufferkondensator nachlädt, oder den IGBT in den leitenden Zustand steuert, damit der Strom am Ausgangspufferkondesator vorbeifließt, wenn die Ausgangspannung $V_0$ einen oberen Grenzwert überschritten hat.

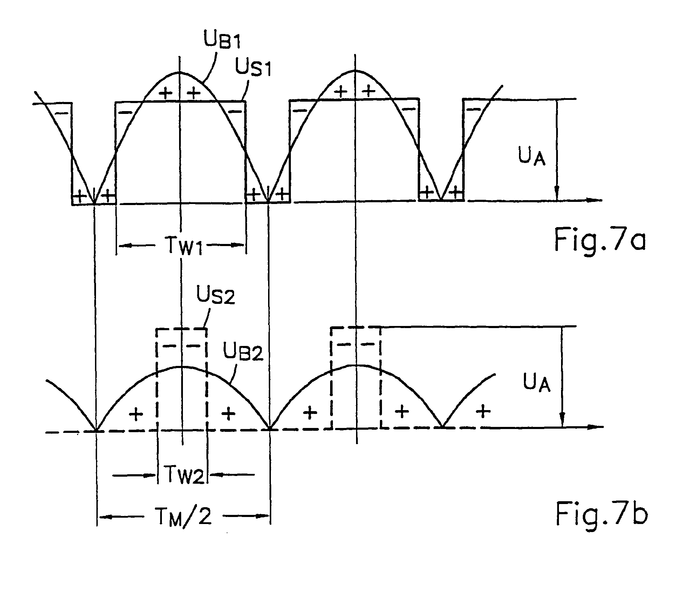

Bei diesem Verfahren der Leistungsübertragung kommt es, wie in Spalte 1, Seite 697 und and Hand von Fig. 7 der Veröffentlichung beschrieben ist, bei plötzlichen Lastwechseln zu unerwünschten Einschwingvorgängen im gesamten Übertragungssystem, was mit der gegenseitigen Beeinflussung der Energieübertragung von mehreren Fahzeugen verbunden ist und zusätzliche Dämpfungsmaßnahmen erforderlich macht.

Diese unerwünschten Einschwingvorgänge haben folgende Ursachen:

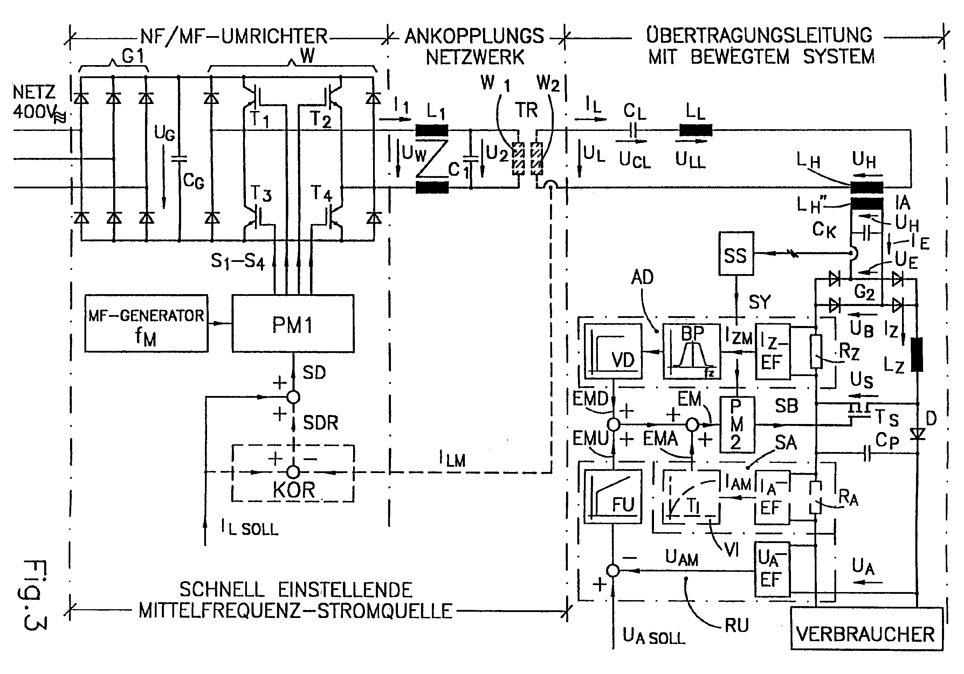

• Mit dem Schalten des Aufnehmer-Controllers, der keine stufenlose Änderung der von dem induktiven Aufnehmer aufgeommenen Leistung und der dabei in die Übertragungsleitung eingekoppelten Spannung ermöglicht, wird eine starke Anregung des aus der Übertragungsleitung und dem Kondsator C1 in Fig. 3 gebildeten Parallelschwingkreises wirksam.

• Die aus der Übertragungsleitung aufgenommene Energie wird zunächst dem Parallelschwingkreis entzogen und über den einspeisenden Stromrichter wegen der in diesem enthaltenen Induktivitäten nur verzögert und nachdem eine Spannungsänderung am Kondensator C1 erfaßt wurde, nachgeliefert.

Die Erfindung hat die Aufgabe, ein Verfahren zur induktiven Übertragung elektrischer Leistung auf mehrere bewegte Verbraucher anzugeben, das keine Einschwingvorgänge in dem allen bewegten Verbrauchern gemeinsamen Strom der Übertragungsleitung aufweist.

Die Aufgabe wird durch die Merkmale der unabhängigen Ansprüche gelöst. Weiterführende und vorteilhafte Ausgestaltungen sind den Unteransprüchen und der Beschreibung zu entnehmen.

Das Wesen der Erfindung wird in der Schaffung eines Verfahrens und einer Anordnung zur induktiven Übertragung elektrischer Leistung von einer stationären Übertragungsleitung auf bewegte Verbraucher gesehen, wobei

• die Übertragungsleitung von einer Mittelfrequenz-Stromquelle, deren Ausgangsspannung $U_L$ sich in einer kurzen nur wenige Halbperioden der Mittelfrequenz dauernden Einstellzeit $T_S$ auf den variablen der Verbraucherleistung entsprechenden Wert stufenlos einstellt, mit einem konstanten Mittelfrequenzstrom $I_L$ gespeist wird

- und die Änderungsgeschwindigkeit der von der Übertragungsleitung über die induktiven Aufnehmer der bewegten Systeme aufgenommenen Leistung durch Stromrichterstellglieder, deren Einstellzeit $T_A$ größer als die Einstellzeit $T_S$ der Mittelfrequenz-Stromquelle ist, so begrenzt wird , daß die Mittelfrequenz-Stromquelle mit der entsprechenden Leistungsabgabe problemlos folgen kann.

Die Erfindung hat den Vorteil, daß Einschwingvorgänge zuverlässig vermieden werden. Ein weiterer Vorteil liegt darin, daß gleichzeitig auch eine gegenseitige Beeinflussung bewegter Verbraucher untereinander ausgeschlossen werden kann.

Das erfindungsgemäße Verfahren hat gegenüber dem Stand der Technik noch folgende weiteren Vorteile:

- Die Übertragungsfrequenz ist leistungsunabhängig und konstant, die induktiven Aufnehmer werden stets in ihrem Resonanzpunkt, d.h. im ihrem Betriebspunkt der optimalen Ausnutzung betrieben.
- Ein Zu- oder Abschalten von Teilkapazitäten bei Belastungsänderungen, wie beispielsweise die zum Stand der Technik zitierte Veröffentlichung auf Seite 698 und auch anhand der Fig. 12 zeigt, ist nicht erforderlich.

Im folgenden sind die Merkmale, soweit sie für die Erfindung wesentlich sind, eingehend erläutert und anhand von Figuren näher beschrieben. Es zeigen

Fig. 1: einen Blockschaltplan des Gesamtsystems zur induktiven Übertragung elektrischer Leistung auf mehrere bewegte Verbraucher,

Fig. 2a: den zeitlichen Verlauf des in die Übertragungsleitung eingeprägten Stromes $I_L$,

Fig. 2b: den zeitlichen Verlauf der von einem induktiven Aufnehmer eines bewegten Systems in die Übertragungsleitung eingekoppelten Spannung $U_H$,

Fig. 2c: den zeitlichen Verlauf der Verbraucherleistung Pv und des Mittelwertes der von der Übertragungsleitung abgenommenen Leistung $P_L$,

Fig. 3: das Schaltprinzip der erfindungsgemäßen Anordnung,

Fig. 4: den zeitlichen Verlauf der pulsförmigen Ausgangsspannung $u_W$ des NF/MF-Umrichters und der zugehörigen Spannungsgrundschwingung $U_1$.

Fig. 5a: ein Ersatzschaltbild zur Bildung eines eingeprägten MF-Stromes,

Fig. 5b: ein Zeigerdiagramm zum Ersatzschaltbild nach Fig. 4a für den Belastungsfall,

Fig. 5c: ein Zeigerdiagramm zum Ersatzschaltbild nach Fig. 4a für den Leerlauffall,

Fig. 6a: ein Ersatzschaltbild der Übertragungsleitung mit Stromeinprägung und mehrern angekoppelten Verbrauchern,

Fig. 6b: ein Zeigerdiagramm zum Ersatzschaltbild nach Fig. 5a,

Fig. 7a: den zeitlichen Verlauf der Gleichrichterausgangsspannung $u_B$ und der pulsweitenmodulierten Schalterspannung $u_S$ des erfindungsgemäßen Stromrichterstellgliedes auf einem bewegten System bei großer Verbraucherleistung,

Fig. 7b: Spannungsverläufe entsprechend Fig. 7a bei kleiner Verbraucherleistung.

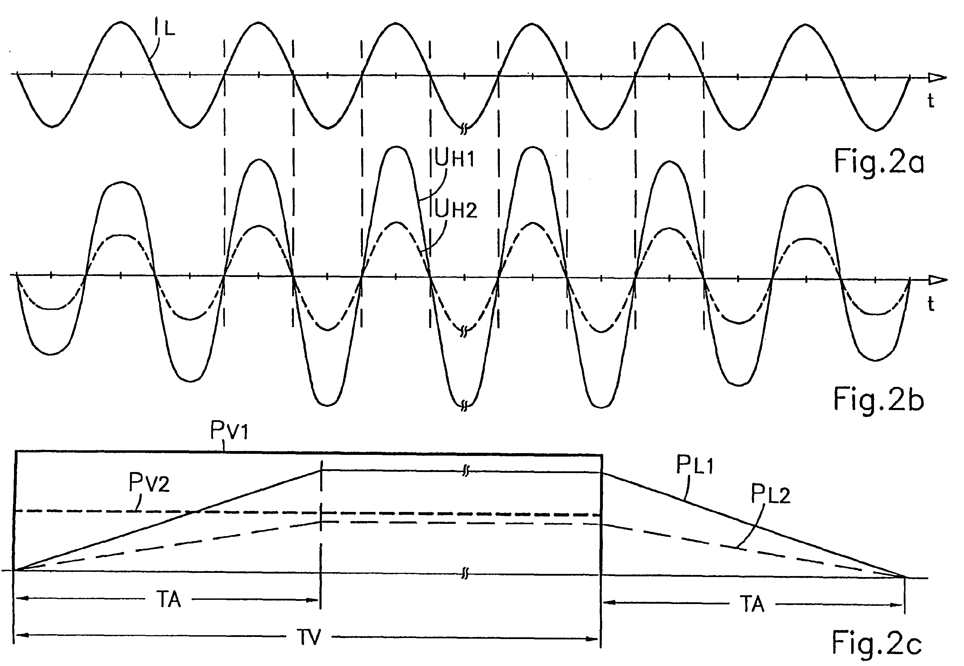

Das erfindungsgemäße Verfahren wird zunächst allgemein an Hand des in Fig. 1 gezeigten Blockschaltplanes und der Diagramme in Fig. 2a bis 2c erläutert.

Der Blockschaltplan zeigt schematisch eine beispielsweise als Doppelleitung ausgebildete Übertragungsleitung, die über einen in Reihe geschalteten Kondensator $C_L$ an eine sich schnell und stufenlos einstellende Mittelfrequenz-Stromquelle angeschlossen ist. Die Erfindung ist unabhängig von der Ausbildung der Übertragungsleitung und daher auch auf die koaxiale Leiteranordnung nach der DE 44 46 779 C2 anwendbar. Die aus einem weiter unten näher erläuterten Niederfrequenz-Mittelfrequenz-Umrichter mit nachgeschaltetem Ankopplungsnetzwerk realisierte schnelleinstellende Mittelfrequenz-Stromquelle prägt einen sinusförmigen, in seinem Effektivwert konstanten Mittelfrequenzstrom $I_L$ mit der Frequenz $f_M$ in die Übertragungsleitung ein. Eine bevorzugte Frequenz $f_M$ liegt im Bereich um 20 kHz.

An die Übertragungsleitung sind die induktiven Abnehmer $IA_X$ und $IA_Y$ von beispielsweise zwei bewegten Systemen X und Y magnetisch bzw. induktiv gekoppelt. Diese Kopplung erfolgt durch die in Fig. 1 dargestellten magnetischen Hauptflüsse $\Phi_{HX}$ und $\Phi_{HY}$, welche die Leiterschleife der Übertragungsleitung und die Wicklung der induktiven Aufnehmer gemeinsam durchsetzen. Diese magnetischen Flüsse haben dieselbe Frequenz wie der Strom $I_L$ des Übertragungsleiters und induzieren in diesem entsprechende Spannungen. Außerdem erzeugt der Strom $I_L$ über die gesamte Länge der Übertragungsleitung zusätzlich den Leiterfluß $\Phi_L$, der einen hohen induktiven Spannungsabfall auf der Übertragungsleitung induziert.

Der mit der Übertragungsleitung in Reihe geschaltete Kondensator $C_L$ ist insbesondere so bemessen, daß der induktive Spannungsabfall auf der Übertragungsleitung durch die Spannung am dem Kondensator $C_L$ vollständig kompensiert wird. Bei Vernachlässigung des ohmschen Spannungsabfalls auf der Leitung ist dann die am Ausgang der Stromquelle auftretende Spannung $U_L$ gleich der Summe der von den magnetischen Hauptflüssen $\Phi_{HX}$ und $\Phi_{HY}$ in der Leiterschleife induzierten Spannungen. Das Produkt dieser Spannungen mit dem Strom $I_L$ und dem Cosinus einer eventuell zwischen beiden Größen bestehenden Phasenverschiebung ist die über die induktiven Aufnehmer auf die bewegten Systeme übertragene Leistung.

Eine sich schnell und stufenlos einstellende Stromquelle gemäß der Erfindung bedeutet, daß sich die Stromquelle mindestens genau so schnell oder schneller und stufenlos auf Leistungsänderungen d. h. auf die erforderliche Ausgangspannung $U_L$ einstellen kann, als diese über die induktiven Aufnehmer in die Übertragungsleitung eingekoppelt werden.

Unter dieser Voraussetzung ist vorteilhafterweise die Spannung $U_L$ am Ausgang der Mittelfrequenz-Stromquelle auch bei dynamischen Leistungsänderungen in jedem Augenblick gleich der Summe der von den induktiven Aufnehmern in der Übertragungsleitung induzierten Spannungen, d. h. die Spannungen an der Leitungsinduktivität und an der in Reihe geschalteten Kapazität $C_L$ ändern sich nicht, und es kommt zu keinen Einschwingvorgängen.

Da die Einstellzeit $T_S$ der Mittelfrequenz-Stromquelle nicht beliebig klein werden kann, wird auf den bewegten Systemen die über die induktiven Abnehmer von der Übertragungsleitung aufgenommene Leistung erfindungsgemäß stufenlos und mit begrenzter Änderungsgeschwindigkeit eingestellt, so daß sich für die übertragene Leistung eine Einstellzeit $T_A$ ergibt, die größer als die Einstellzeit $T_S$ der Mittelfrequenz-Stromquelle ist.

Die Mittelfrequenz-Stromquelle weist eine maximale Einstellzeit ($T_S$) ihres Ausgangssignals auf, die kleiner ist als die Einstellzeit ($T_A$) der Leistungsaufnahme am Verbraucher. Die zwischen Mittelfrequenz-Stromquelle und Verbraucher liegende Übertragungsleitung ist als Serienschwingkreis für diese Mittelfrequenz ausgebildet.

Zu diesem Zweck ist vorzugsweise, wie Fig. 1 zeigt, auf den bewegten Systemen zwischen einen Energiepufferspeicher, aus dem die angeschlossenen Verbraucher Leistung mit beliebiger Anstiegsgeschwindigkeit entnehmen können, und den induktiven Aufnehmer IA ein Stromrichterstellglied geschaltet, das von einem Signal $S_B$ in der Weise angesteuert wird, daß die Leistungsaufnahme von der Übertragungsleitung stufenlos und mit begrenzter Änderungsgeschwindigkeit erfolgt. Die in dem Signal $S_B$ enthaltene Information zur Begrenzung der Änderungsgeschwindigkeit der Leistungsaufnahme kann vorzugsweise in einer eigens dafür vorgesehenen Begrenzungsstufe oder in einer anderen Ausführung vorteilhaft in der Regelungsstufe, welche die dem Verbraucher zugeführte Ausgangsspannug $U_A$ des Energiepufferspeichers auf den Sollwert $U_{ASOLL}$ regelt, gebildet werden.

Der zu dem induktiven Aufnehmer IA am Eingang des Stromrichterstellgliedes parallel geschaltete Kondesator $C_K$ bildet mit der Induktivität des Aufnehmers einen Parallelschwingkreis, der bei der Frequenz $f_M$ des Übertragungsleiterstromes $I_L$ in Resonanz kommt. Bei dieser Resonanz liefert der Kondensator $C_K$ den gesamten Magnetisierungsstrom des induktiven Aufnehmers, und die Übertragungsleitung wird, wie die Phasengleichheit des in Fig. 2a dargestellten Übertragungsleiterstromes $I_L$ und der in Fig. 2b dargestellten vom induktiven Aufnehmer IA in den Übertragungslleiter eingekoppelten Spannungen $U_{H1}$ und $U_{H2}$ zeigt, mit reiner Wirkleistung belastet. In Fig. 2c sind bespielhaft zwei unterschiedlich große, sich sprungförmig ändernden Verbraucherleistungen $P_{V1}$ und $P_{V2}$ mit der Dauer $T_V$ sowie die von der Übertragungsleitung aufgenommenen und durch das Stromrichterstellglied im Anstieg begrenzten Leistungen $P_{L1}$ und $P_{L2}$ dargestellt. Entsprechend diesem Leistungsverlauf ändern sich auch die in die Übertragungsleitung eingekoppelten Spannungen während der Anstiegszeit $T_A$ stetig.

In Betriebszeiten, in denen alle bewegten Verbraucher gleichzeitig einen geringeren Leistungsbedarf haben, insbesondere in gemeinsamen Stillstandszeiten der die Bewegung bewirkenden Antriebe, oder während des Inbetriebnehmens und Stillsetzens des Gesamtsystems, ist die Einspeisung kleinerer Ströme $I_L$ in den Übertragungsleiter vorteilhaft. Der Niederfrequenz/Mittelfrequenz-Umrichter (NF/MF-Umrichter) weist daher, wie in Fig. 1 dargestellt ist, ein Eingangssignal $IL_{SOLL}$ auf, das die Vorgabe beliebiger Ströme $I_L$ zwischen dem Wert Null und einem Maximalwert ermöglicht. Die Anforderungen an die Änderungsgeschwindigkeit dieses Signals sind gering. Sie ist wesenlich kleiner zu bemessen als die Änderungsgeschwindigkeit der von der Übertragungsleitung abgenommenen Leistung.

Für viele Anwendungen ist ein ungeregeltes Einstellen des Übertragungsleiterstromes hinreichend genau. Beim Einwirken von starken Störgrößen sind jedoch höhere Genauigkeiten des Übertragungsleiterstromes vorteilhaft erreichbar, wenn dieser gemessen und die Meßgröße $I_{LM}$, wie in Fig. 1 gestrichelt dargestellt ist, dem NF/MF-Umrichter zum Zecke der Regelung des Übertragungsleiterstromes $I_L$ auf den Sollwert $IL_{SOLL}$ zugeführt wird.

Das Schaltprinzip einer besonders vorteilhaften Anordnung zur Realisierung des erfindungsgemäßen Verfahrens zeigt die Fig. 3. Im ihrem linken Teil ist die aus dem NF/MF-Umrichter und dem Ankopplungsnetzwerk bestehende schnell einstellende Mittelfrequenz-Stromquelle dargestellt. Sie speist über einen Transformator TR die Übertragungsleitung mit einem bewegten System im rechten Teil der Fig.3. Grundsätzlich ist davon auszugehen, daß eine Vielzahl, beispielsweise 10 oder mehr, in ihrem Prinzip gleiche Systeme an dieselbe Übertragungsleitung induktiv angekoppelt sind.

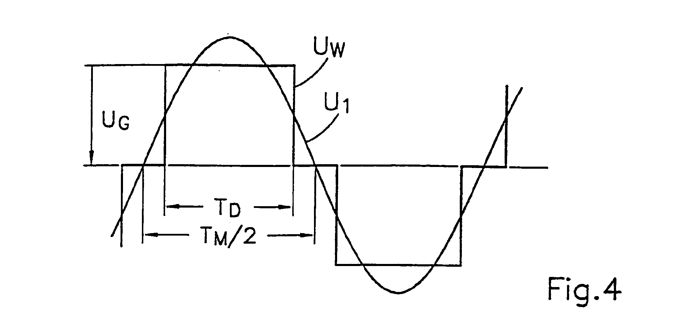

Der NF/MF-Umrichter besteht aus einem Drehstrom-Brückengleichrichter G1 mit einem nachgeschalteten Einphasen-Pulswechselrichter W. Die beiden Stromrichter sind über einen Gleichspannungszwischenkreis mit der Gleichspannung $U_G$ und dem Pufferkondensator $C_G$ miteinander verbunden. Die IGBT$_S$ T1 bis T4 des Wechselrichters werden über die in einer Pulsdauermodulationsstufe PM1 generierten Signale S 1 bis S4 in der Weise ein- und ausgeschaltet, daß an dem an den Wechselrichter angeschlossenen Ankopplungsnetzwerk die in Fig. 4 dargestellte pulsförmige Wechselspannung $u_W$ entsteht. Die Frequenz $f_M$ dieser Wechselspannung ist konstant und wird der Modulationsstufe von einem Frequenzgenerator zugeführt. Über das ebenfalls der Modulationsstufe zugeführte Signal SD ist die Pulsdauer $T_D$ der Wechselspannung $u_W$ von Null bis auf den Maximalwert $T_M/2$, d. h. der halben Periodendauer der Frequenz $f_M$ stufenlos einstellbar. Dabei ändert sich die ebenfalls in Fig. 4 dargestellte Grundschwingung U1 in ihrem Effektivwert von Null bis auf ihren maximalen Wert.

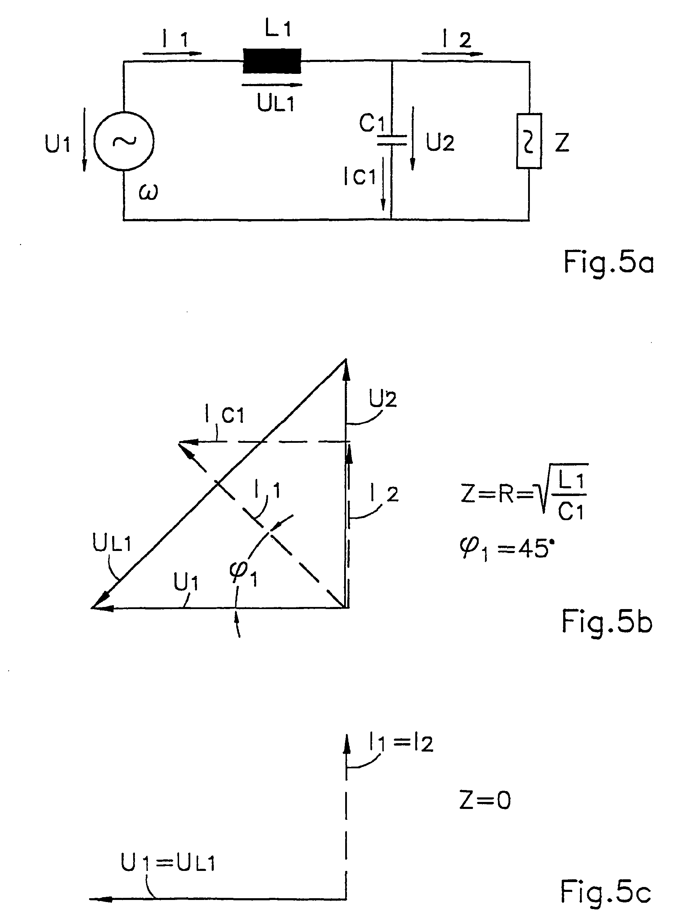

Das Ankopplungsnetzwerk besteht im wesentlichen aus einem Reihenschwingkreis mit einer Induktivität $L_1$ und einer Kapazität $C_1$, wobei die Übertragungsstrecke an die Kapazität $C_1$ angekoppelt ist. Das Netzwerk wirkt als Filter, das die in der pulsförmigen Wechselspannung $u_W$ enthaltenen Oberschwingungen unterdrückt und die Grundschwingung auf die Übertragungsleitung überträgt. Die weiteren Betrachtungen des erfindungsgemäßen Ankopplungsnetzwerkes beschränken sich daher auf sein Grundschwingungsverhalten. Sie werden an Hand des Ersatzschaltbildes in Fig. 5a und der Zeigerdiagramme in den Fig. 5b und 5c durchgeführt.

Mit Hilfe kompexer Größen berechnet sich die Ausgangsspannung $U_2$ des Ersatzschaltbildes zu:

$$U_2 = \frac{U_1}{j\omega L_1} \cdot \frac{1}{j\sqrt{\frac{C_1}{L_1}}\left(\frac{\omega}{\omega_1} - \frac{\omega_1}{\omega}\right) + \frac{1}{Z}} \quad ,$$

Darin ist $\omega = 2\pi f_M$ und $\omega_1 = \dfrac{1}{\sqrt{(L_1 C_1)}}$.

Bei der erfindungsgemäßen Auslegung des Reihenschwingkreises für den Resonanzfall $\omega_1 = \omega$ berechnen sich die am Kondensator $C_1$ abzugreifende Ausgangsspannung $U_2$ und der einer beliebigen Impedanz Z zugeführte Ausgangsstrom $I_2$ zu:

$$U_2 = -j\frac{U_1}{\sqrt{\frac{L_1}{C_1}}} \cdot Z \; , \qquad\qquad I_2 = -j\frac{U_1}{\sqrt{\frac{L_1}{C_1}}}$$

Diese Zusammenhänge zeigen, daß der in Fig. 3 dargestellte NF/MF-Umrichter und der angeschlossene Reihenschwingkreis bei Resonanz eine Mittelfrequenz-Stromquelle bilden, die in eine beliebige Impedanz Z und somit auch in die Übertragungsleitung, die in Fig. 3 über den Transformator TR an die Kapazität $C_1$ angeschlossen ist, einen nur von der Grundschwingungsspannung $U_1$ sowie der Dimensionierung des Reihenschwingkreises abhängenden Strom $I_2$ treibt.

Die Spannung $U_2$, die sich an der Kapazität $C_1$, d. h. am Ausgang der Mittelfrequenz-Stromquelle einstellt, ist gleich dem Produkt des Stromes $I_2$ und der angeschlossenen Impedanz Z. Für die vom Ankopplungsnetzwerk übertragene Leistung $P_1$ gilt allgemein:

$$P_1 = \frac{U_1^2}{\sqrt{\frac{L_1}{C_1}}} \cdot \frac{R}{\sqrt{\frac{L_1}{C_1}}}$$

Hierbei ist R ein im Strompfad von $I_2$ gedachter ohmscher Widerstand.

Die Gleichung für den Ausgangsstrom der Stromquelle $I_2$ zeigt, daß dieser über die Spannungsgrundschwin-

gung $U_1$ und somit über die Pulsdauer $T_D$ durch das der Pulsdauermodulationsstufe PM1 zugeführte Signal SD einstellbar ist. Das Signal SD kann, wie Fig. 3 zeigt, mit dem Sollwert des Übertragungsleiterstromes $IL_{SOLL}$ übereinstimmen. In diesem Fall steuert der Sollwert den Übertragungsleiterstrom $I_L$.

Bei der Vorgabe der Pulsdauer $T_D$ schwankt jedoch die Spannungsgrundschwingung $U1$ und somit auch der Übertragungsleiterstrom $I_L$ mit der Zwischenkreisspannung $V_G$ bzw. der Netzspannung. Darüber hinaus können Bauelementetoleranzen, die beispielsweise auch von der Temperatur abhängen, weitere Abweichungen des Übertragungsleiterstromes $I_L$ vom Sollwert verursachen. Es ist daher bei höheren Anforderungen an die Genauigkeit der zu übertragenden Leistung vorteilhaft, wie in Fig. 3 gestrichelt dargestellt ist, den Übertragungsleiterstrom zu messen und die Abweichung der Messgröße $I_{LM}$ vom Sollwert $I_{LSOLL}$ mit einem Regler KOR, der ein Signal SDR als weitere Komponente des die Pulsdauer $T_D$ steuernden Signals SD erzeugt, auf Null zu regeln. Diese Regelung bewirkt jedoch nur eine Korrektur des Übertragungsleiterstromes $I_L$, um eine höher Genauigkeit zu erreichen und beeinflußt das schnelle Einstellen dieses Stromes bei Änderungen der übertragenen Leistung nicht nachteilig.

Die Zeigerdiagramme in Fig. 5b und 5c veranschaulichen zwei Sonderfälle der Belastung der erfindungsgemäßen Stromquelle. In Fig. 5b ist die Impedanz Z ein ohmscher Widerstand R, der in seinem Betrag mit dem Schwingwiderstand $\sqrt{(L_1/C_1)}$ des Reihenschwingkreises übereinstimmt. In diesem Fall sind der Ausgangstrom $I_2$ und der Kondensatorstrom $I_{C_1}$ gleich groß, und der Wechselrichter-Ausgangsstrom $I_1$ eilt gegenüber der Spannungsgrundschwingung $U_1$ um den Phasenwinkel $\varphi_1=45°$ nach. Es ist nachgewiesen, daß bei diesem Belastungsfall die auf die Leistung $P_1$ bezogene Blindleistung der Induktivität $L_1$ und damit deren Abmessungen ein Minimum haben. Das erfindungsgemäße Ankopplungsnetzwerk wird daher für die Übertragung einer gegebenen Leistung $P_1$ vorteilhaft so dimensioniert, daß die Leistung $P1$ bei der Bedingung $R = \sqrt{(L_1/C_1)}$ erreicht wird. Im Leerlauffall ist R = 0. Für den Fall, daß alle Leitungsinduktivitäten kompensiert sind, ist auch Z = 0. Das entspricht einem kurzgeschlossenen Kondensator $C_1$ und dem Zeigerdiagramm in Fig. 5c

Das erfindungsgemäße Ankopplungsnetzwerk hat in dem betriebsmäßig bevorzugten Belastungsbereich von $0 < R \leq \sqrt{(L_1/C_1)}$ ausgezeichnete Dämpfungseigenschaften und schwingt bei sprunghaften Änderungen des Belastungswiderstandes R in wenigen Halbperioden der Mittelfrequenz $f_M$ überschwingungsfrei auf den neuen stationären Zustand ein. Daraus folgt für die erfindungsgemäße Mittelfrequenz-Stromquelle, bestehend aus dem an Hand der Fig. 3 und 4 beschriebenen NF/MF-Umrichter und dem an Hand der Fig. 3 und 5a bis 5c beschriebenen Ankopplungsnetzwerk, eine wesentlich kürzere Einstellzeit $T_S$ als diese mit einer Mittelfrequenz-Stromquelle nach dem Stand der Technik erreichbar ist.

Durch die Wahl des Übersetzungsverhältnisses $w_1/w_2$ des Transformators TR in Fig. 3 werden die auf der Übertragungsleitung bei Nennleistungsaufnahme der bewegten Systeme wirksamen Ersatzwiderstände $R_{XN}'$ so angepaßt, daß ihre Summe am Kondensator $C_1$ die Bedingung $\sum R_{XN}' = \sqrt{(L_1/C_1)}$ erfüllt.

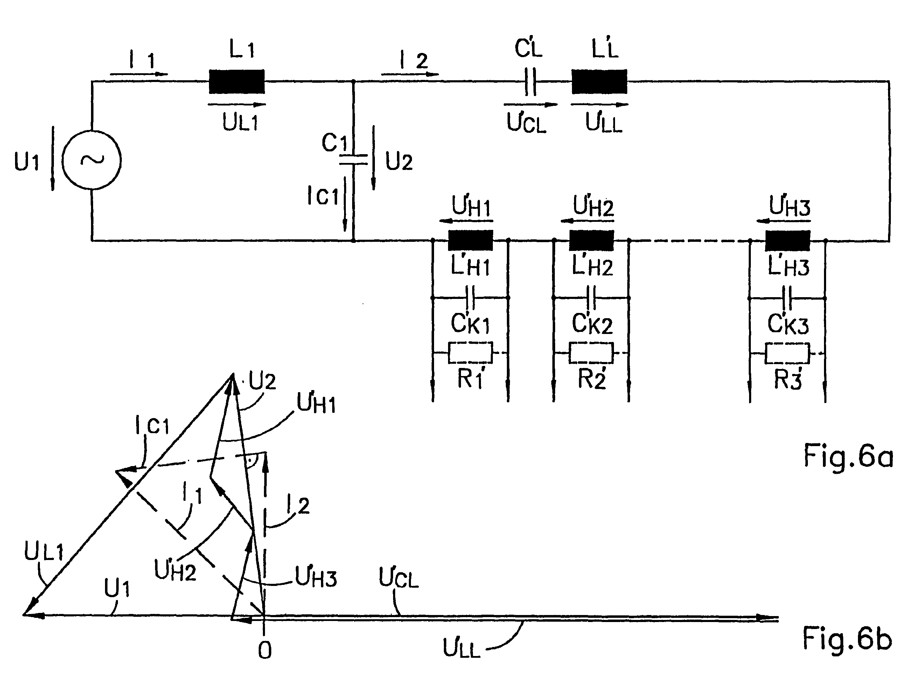

Fig. 6a zeigt ein Ersatzschaltbild der erfindungsgemäßen Anordnung mit Übertragungleitung und drei bewegten Systemen. Der an die Mittelfrequenz-Stromquelle angekoppelte Teil der Anordnung wird durch die auf die Stromquellenseite transformierten Schaltungsgrößen repräsentiert. Das sind die Induktvität der Übertragungsleitung $L_L'$, die Kapazität $C_L'$, welche die Spannung an der Induktivität $L_L'$ weitgehend kompensiert, und von den bewegten Systemen die transformierten Hauptinduktivitäten $L_{HX}'$ der induktiven Aufnehmer mit den Kapazitäten $C_{KX}'$ und den Ersatzwiderständen $R_X'$ für beliebige übertragene Leistungen. Bei langen Übertragungsleitungen von z. B. 200 m ist im allgemeinen, wie das Zeigerdiagramm in Fig. 6b zeigt, die Spannung $U_{LL'}$ an der Induktivität $L_L'$ größer als die Summe aller den übertragenen Teilleistungen entsprechenden Spannungen $U_{HX'}$. Wegen der nahezu vollständigen Kompensation der Spannung $U_{LL'}$ durch die Kondensatorspannung $U_{CL'}$ geht nur die Differenz beider Spannungen in die Ausgangsspannung $U_2$ der Stromquelle ein. Die Ausgangsspannung $U_2$ ist im wesentlichen durch den resultierenden Zeiger der Teilspannungen von $U_{H1}'$, $U_{H2}'$ und $U_{H3}'$ gegeben.

Die Induktivität $L_L'$ der Übertragungsleitung und die Kapazität $C_L'$ sind der Länge der Spannungszeiger $U_{LL'}$ und $U_{CL'}$ entsprechend große Energiespeicher, die zwischen den Ausgang der Mittelfrequenz-Stromquelle und die induktiven Aufnehmer der bewegten Systeme geschaltet sind. Diese Energiespeicher beeinflussen jedoch das dynamische Verhalten der Leistungsübertragung nicht, weil sie wegen der Konstanz des Stromes $I_2$ bei Änderungen der übertragenen Leistung nicht ihren Energieinhalt und somit auch nicht ihre Spannungen ändern, und die Änderungsgeschwindigkeit der von den induktiven Aufnehmern erzeugten Spannungen $U_{HX'}$ durch die erfindungsgemäßen Stromrichter-Stellglieder auf den bewegten Systemen so begrenzt ist, daß die sich schnell einstellende Mittelfrequenz-Stromquelle diesen Spannungsänderungen ohne Abweichungen folgt.

An Hand der im rechten Teil der Fig. 3 dargestellten Anordnung des erfindungsgemäßen Stromrichterstellgliedes mit der erfindungsgemäßen Regelung wird nun erläutert, wie diese die Änderungsgeschwindigkeit der über die induktiven Aufnehmer aufgenommene Leistung begrenzt, so daß deren Einstellzeit $T_A$ größer als die Einstellzeit $T_S$ der Mittelfrequenz-Stromquelle ist. Der induktive Aufnehmer IA, ist als Transformator dargestellt, dessen sekundärseitige Induktivität $L_H"$ mit einem Kondensator $C_K$ einen Parallelschwingkreis bildet. Dabei liefert der Kondensator $C_K$ den in der Regel hohen Magnetisierungsstrom des als Luftspalttransformator ausgeführten induktiven Aufnehmers. Der Parallelschwingkreis ist an den Eingang des Gleichrichters G2 des Stromrichterstellgliedes angeschlossen. Ein Hochsetzsteller, bestehend aus einer Induktivität $L_Z$, einem steuerbaren Leistungshalbleiter TS, einer Diode D sowie einem als Pufferspeicher wirkender Kondensator $C_P$ sind dem Gleichrichter nachgeschaltet.

Dieser Leistungsteil des erfindungsgemäßen Stromrichterstellgliedes unterscheidet sich von dem Leistungsteil, der in Fig. 10 der zum Stand der Technik zitierten Veröffentlichung gezeigt ist, lediglich durch einen Meßwiderstand $R_Z$ zum Erfassen des Zwischenkreisgleichstromes $I_Z$ und einem Meßwiderstand $R_A$ zum Erfassen des Verbraucherstromes $I_A$. An die niederohmigen Meßwiderstände sind Stromerfassungsstufen $I_Z$-EF, $I_A$-EF angeschlossen, die aus den abgegriffenen kleinen Spannungsmeßwerten Stromsignale $I_{ZM}$, $I_{AM}$ für die Verarbeitung in der Regelelektronik aufbereiten. Diese Stomsignale sind, wie weiter unten beschrieben ist, erst für Weiterbildungen der erfindungsgemäßen Anordnung erforderlich.

Der wesentliche Unterschied zu dem Stromrichterstellglied nach dem Stand der Technik besteht in dem Informationsinhalt und somit in der Bildung des den steuerbaren Leistungshalbleiter TS ein- und ausschaltenden Signals SB. In der erfindungsgemäßen Anordnung wird dem steuerbaren Leistungshalbleiter TS das Signal SB aus einer Pulsdauermodulationsstufe PM2 zugeführt, welche ein Eingangssignal EM der Modulationsstufe in das pulsförmige Signal SB in der Weise wandelt, daß das Verhältnis der Ausschaltzeit $T_W$ des steuerbaren Leistungshalbleiters TS zur Zykluszeit $T_Z$ zum Wert des Eingangssignals EM propotional ist und die Zyluszeit $T_Z$ in der Größenordnung der halben Periodendauer $T_M/2$ der Mittelfrequenz $f_M$ liegt.

Die Pulsdauermodulationsstufe PM2, der ein Signal SY zur Vorgabe der Zykluszeit $T_Z$ und das Signal EM zur Vorgabe des Schaltzeitenverhältnisses $T_W/T_Z$ zugeführt sind, ermöglicht die stufenlose Einstellung der von der Übertragungsleitung aufgenommenen Leistung $P_L$. Eine hohe Frequenz des Signals SY, die beispielsweise in der Göße der doppelten Mittelfrequenz $f_M$ liegt, führt zu einem kleinen Wert der Induktivität $L_Z$ im Hochsetzsteller und ermöglicht schnelle Änderungen der übertragenen Leistung. Andererseits darf, um Einschwingvorgänge auf der Übertragungsleitung zu vermeiden, die Änderungsgeschwindigkeit der übertragenen Leistung nicht schneller sein, als die mögliche Änderungsgeschwindigkeit der von der Stromquelle in die Übertragungsleitung eingespeisten Leistung.

Unzulässig hohe Änderungsgeschwindigkeiten der übertragenen Leistung treten bei Reglerstufen zum Regeln der Verbraucherspannung $U_A$ auf einen Sollwert $U_{ASOLL}$ auf, wenn die Reglerstufen die dem Pufferkondensator zugeführte übertragene Leistung nur zwischen wenigen Werten umschalten oder die übertragene Leistung $P_L$ bei stufenloser Veränderung zu schnell wechselnden Verbraucherleistungen folgen lassen.

Bei der erfindungsgemäßen Anordnung führt eine Spannungsreglerstufe RU dem Eingangssignals EM der Pulsdauermodulationsstufe PM2 eine Signalkomponente EMU zu, deren Änderungsgeschwindigkeit durch die Kapazität des Pufferkondensators $C_P$ und die Übertragungsfunktion FU der Spannungsreglerstufe so bemessen ist, daß die Signalkomponente EMU bei einer sprungförmigen Änderung des Ausgangsstromes $I_A$ erst nach der gegenüber der Einstellzeit $T_S$ der Mittelfrequenz-Stromquelle länger dauernden Einstellzeit $T_A$ des Stromrichterstellgliedes ihren neuen Endwert erreicht.

Die in Fig. 3 gezeigte Spannungserfassungsstufe $U_A$-EF dient zur Umsetzung der hohen Verbraucherspannung $U_A$ von z. B. 320 V in das der Reglerstufe zugeführte Spannungmessignal $U_{AM}$ und hat für die Erfindung keine Bedeutung.

Unerwünschte Einschwingvorgänge und Schwingungen sind auf dem bewegten System auch ohne Mitwirkung der Übertragungsleitung und der Mittelfrequenz-Stromquelle möglich. So bildet der Parallelschwingkreis aus der Induktivität $L_H"$ des induktiven Aufnehmers und der Kapazität $C_K$ über den Gleichrichter G2 mit der Induktivität $L_Z$ des Hochsetzstellers ein nahezu ungedämpftes schwingungsfähiges System mit einer Eigenfrequenz $f_Z$, die je nach der Größe der Induktivität $L_Z$ etwa in dem Bereich 0,15 $f_M$ bis 0,3 $f_M$ liegt. Eigenschwingungen in diesem System werden erfindungsgemäß dadurch gedämpft, daß eine aktive Dämpfungsstufe AD diese Schwingungen im Zwischenkreisstrom $I_Z$ erfaßt, mittels eines Bandpasses BP und eines Verstärkers VD daraus ein Signal EMD bildet und dieses als weitere Komponente des Eingangssignals EM der Pulsdauermodulationsstufe PM2 zuführt. Der Bandpaß bewirkt, daß nur im Zwischenkreisstrom enthaltene Schwingungen in einem Frequenzbereich um die Eigenfrequenz $f_Z$ zur Bildung des Signals EMD beitragen. Überlagert sich dem Zwischenkreisstrom $I_Z$ eine Schwingung der Frequenz $f_Z$, dann bewirkt eine dadurch hervorgerufene Änderung des Zwischenkreisstromes eine Modulation der Sperrzeit $T_W$ und damit der Spannung $U_S$ im Zwischenkreis in der Weise, daß die Spannung $U_S$ einem Aufschwingen des Zwischenkreisstromes zu höheren Amplituden entgegenwirkt.

Eine Reduzierung der dynamischen Abweichungen der Ausgangsspannung $U_A$ von ihrem Sollwert $U_{ASOLL}$ bei großen und sprungförmigen Änderungen der Verbraucherleistung ist erreichbar, wenn eine in Fig. 3 gestrichelt dargestellte Stromaufschaltungsstufe SA die Regelung der Ausgangsspannung unterstützt. Zu diesem Zweck wird aus dem Strommessignal $I_{AM}$ über eine Verzögerungsstufe VI eine weitere Signalkomponente EMA dem Eingangssignal EM der Pulsdauermodulationsstufe PM2 zugeführt. Das Signal EMA ist so bemessen, daß es im stationären Zustand über die Modulationsstufe ein Verhältnis der Ausschaltzeit $T_W$ des steuerbaren Leistungshalbleiters zur Zykluszeit $T_Z$ einstellt, bei dem die von der Übertragungsleitung aufgenommene Leistung $P_L$ annähernd mit der Verbraucherleistung Pv übereinstimmt. Sprunghafte Änderungen des Verbraucherstromes $I_A$ werden über die Verzögerungsstufe VI mit einer Zeitkonstanten $T_1$ auf die Signalkomponente EMA übertragen, so daß die gegenüber der Einstellzeit $T_S$ der Mittelfrequenzstromquelle länger dauernde Einstellzeit $T_A$ des Stromrichterstellgliedes eingehalten wird.

Für das Stromrichterstellglied auf dem bewegten System werden in der Regel ein kleiner Raumbedarf und ein kleines Gewicht angestrebt. Für die Induktivität $L_Z$ ist nachgewiesen, daß diese Größen bei einer gegebenen Welligkeit des Zwischenkreisstromes $I_Z$ ein Minimum erreichen, wenn, wie die Fig. 7a und 7b für zwei verschieden lange Sperrzeiten $T_W$ und damit für zwei verschiedene Werte der übertragenen Leistung $P_L$ zeigen, die Halbschwingungen der Gleichrichterausgangsspannung $u_B$ symmetrisch zu den Spannungspulsen der Schalterspannung $u_S$ liegen. Um diese symmetrische Lage der Spannungen $u_S$ und $u_B$ zuerreichen, ist der Pulsdauermodulationsstufe PM2 ein Synchronisationssignal SY, das eine Synchronisationsstufe SS aus dem mittelfrequenten Eingangsstrom $I_E$ oder der Eingangsspannung $U_E$ des Stromrichterstellgliedes generiert, zugeführt, welches die Bildung des Ausgangssignals SB der Pulsdauermodulationsstufe in der Weise beeinflußt, daß die Zykluszeit $T_Z$ des Signals SB mit der Dauer einer Halbperiode $T_M/2$ der Mittelfrequenz $f_M$ genau übereinstimmt und die Ausschaltzeit $T_W$ des steuerbaren Leistungshalbleiters TS etwa je zur Hälfte vor und hinter dem Scheitelwert der Ausgangsspannung $u_B$ des Gleichrichters G2 liegt.

## Patentansprüche

1. Verfahren zur induktiven Übertragung elektrischer Leistung aus einer Mittelfrequenzstromquelle mit einer Frequenz ($f_M$) auf einen oder mehrere bewegte Verbraucher über eine langgestreckte Übertragungsleitung und den bewegten Verbrauchern zugeordneten induktiven Aufnehmern ($IA_X$,$IA_Y$) mit nachgeschalteten Stromrichterstellgliedern, sowie zum Einstellen der von der Übertragungsleitung aufgenommenen und Pufferspeichern, an welche die bewegten Verbraucher angeschlossen sind, zugeführten Leistung ($P_{LX}$,$P_{LY}$), wobei die Übertragungsleitung von einer Stromquelle mit einem während der Leistungsübertragung in seinem Effektivwert konstanten Mittelfrequenzstrom ($I_L$) gespeist wird,
**dadurch gekennzeichnet,**
**daß** sich die Ausgangspannung ($U_L$) der Mittelfrequenz-Stromquelle innerhalb einer maximalen Einstellzeit ($T_S$), die nur wenige Halbperioden der Mittelfrequenz ($f_M$) dauert, stufenlos auf den Wert einstellt, welcher der von der Übertragungsleitung insgesamt abgenommenen veränderlichen Leistung entspricht, und daß das zwischen den Pufferspeicher und den induktiven Leistungsaufnehmer (IA) jedes bewegten Verbrauchers geschaltete Stromrichterstellglied die von der Übertragungsleitung abgenommene und dem Pufferspeicher zugeführte mittlere Verbraucherleistung ($P_L$) innerhalb einer Einstellzeit ($T_A$), die größer als die maximale Einstellzeit ($T_S$) der Mittefrequenzstromquelle ist, stufenlos und mit begrenzter Änderungsgeschwindigkeit einstellt.

2. Verfahren nach Anspruch 1,
**dadurch gekennzeichnet,**
**daß** die Information zur stufenlosen Einstellung der durch den induktiven Aufnehmer (IA) von der Übertragungsleitung aufgenommenen und dem Pufferspeicher zugeführten Leistung ($P_L$) sowie die Information zur Änderungsgeschwindigkeit dieser Leistung und somit auch die Information zur Realisierung der Einstellzeit ($T_A$) des Stromrichterstellgliedes in einem das Stromrichterstellglied steuernden Signal (SB) enthalten sind.

3. Verfahren nach Anspruch 2,
**dadurch gekennzeichnet,**
**daß** die den bewegten Verbrauchern zugeführte Ausgangsspannung ($U_A$) des Pufferspeichers auf einen vorgegebenen Sollwert ($U_{ASOLL}$) geregelt ist und die in dem Steuersignal (SB) des Stromrichterstellgliedes enthaltene Information zur Einstellung der von der Übertragungsleitung aufgenommen Leistung ($P_L$) sowie deren Änderungsgeschwindigkeit durch die vom Verbraucher aufgenommene Leistung ($P_v$) und die Dimensionierung des Zeitverhaltens dieser Regelung gegeben sind.

4. Verfahren nach einem der Ansprüche 1 bis 3
**dadurch gekennzeichnet,**
**daß** der Effektivwert des von der Mittelfrequenz-Stromquelle in die Übertragungsleitung eingespeisten Stromes ($I_L$) während der Leistungsübertragung auf die bewegten Systeme einen konstanten Wert hat und in Zeitbereichen, in denen keine oder nur eine gegenüber der maximal übertragbaren Leistung kleine Leistung übertragen wird, mit einer Änderungsgeschwindigkeit, die wesentlich unter der zulässigen Änderungsgeschwindigkeit der von der Übertragungsleitung abnehmbaren Leistung liegt, stufenlos steuerbar ist.

5. Verfahren nach einem der Ansprüche 1 bis 4,
   **dadurch gekennzeichnet,**
   **daß** der Effektivwert des in die Übertragungsleitung eingespeisten Mittelfrequenzstromes ($I_L$) auf einen vorgegebenen Sollwert ($I_{LSOLL}$) geregelt wird.

6. Anordnung zur induktiven Übertragung elektrischer Leistung aus einer Mittelfrequenzquelle mit einer Frequenz ($f_M$) auf einen oder mehrere bewegte Verbraucher über eine langgestreckte Übertragungsleitung und den bewegten Verbrauchern zugeordneten induktiven Aufnehmern ($IA_X$, $IA_Y$) mit nachgeschalteten Stromrichterstellgliedern, sowie zum Einstellen der von der Übertragungsleitung aufgenommenen und Pufferspeichern, an welche die bewegten Verbraucher angeschlossen sind, zugeführten Leistung ($P_{LX}$, $P_{LY}$ ), wobei die Übertragungsleitung von einer Stromquelle mit einem während der Leistungübertragung in seinem Effektivwert Konstanten Mittelfrequenzstrom ($I_L$) gespeist wird,
   **dadurch gekennzeichnet,**
   **daß** die Anordnung geeignete Mittel aufweist, die bewirken, daß sich die Ausgangspannung (UL) der Mittelfrequenz-Stromquelle innerhalb einer maximalen Einstellzeit (Ts), die nur wenige Halbperioden der Mittelfrequenz (fM) dauert, stufenlos auf den Wert einstellt, welcher der von der Übertragungsleitung insgesamt abgenommenen veränderlichen Leistung entspricht, und daß das zwischen den Pufferspeicher und den induktiven Leistungsaufnehmer (IA) jedes bewegten Verbrauchers geschaltete Stromrichterstellglied die von der Übertragungsleitung abgenommene und dem Pufferspeicher zugeführte mittlere Verbraucherleistung (PL) innerhalb einer Einstellzeit (TA), die größer als die maximale Einstellzeit (Ts) der Mittefrequenzstromquelle ist, stufenlos und mit begrenzter Änderungsgeschwindigkeit einstellt.

7. Anordnung nach Anspruch 6,
   **dadurch gekennzeichnet,**
   **daß** die zwischen Mittelfrequenz-Stromquelle und Verbraucher liegende Übertragungsleitung als Serienschwingkreis für diese Mittelfrequenz ausgebildet ist.

8. Anordnung nach Anspruch 6 oder 7
   **dadurch gekennzeichnet,**
   **daß** die Anordnung einen <u>N</u>iederfrequenz-<u>M</u>ittelfrequenz-Umrichter (NF/MF-Umrichter) mit einer durch einen Kondensator ($C_G$) gepufferten Zwischenkreisgleichspannung ($U_G$) und einen aus steuerbaren Leistungshalbleitern (T1, T2, T3, T4) gebildeten und durch einen Frequenzgenerator mit der Frequenz ($f_M$) der Mittelfrequenz-Stromquelle gesteuerten Wechselrichter (W) zum Erzeugen einer pulsförmigen Ausgangswechselspannung ($u_W$) sowie einen an die Ausgangswechselspannung ($u_W$) des Umrichters angeschlossenen Ankopplungsnetzwerk, das einen von einer Induktivität ($L_1$) und einer Kapazität ($C_1$) gebildeten Reihenschwingkreis aufweist, dessen Resonanzfrequenz $1/(2\pi\sqrt{L_1 C_1})$ mit der Frequenz ($f_M$) des Umrichters übereinstimmt und bei dem die Anschlüsse des Kondensators ($C_1$) die Ausgänge der Mittelfrequenz-Stromquelle sind.

9. Anordnung nach Anspruch 8,
   **dadurch gekennzeichnet,**
   **daß** die Induktivität ($L_1$) und die Kapazität ($C_1$) des Ankopplungsnetzwerkes zum Erreichen einer übertragbaren Nennleistung ($P_N$) nach der Beziehung $\sqrt{(L_1/C_1)} \approx U_{1N}^2 / P_N$ bemessen sind, wobei $U_{1N}$ die effektive Nennspannung der Grundschwingung der pulsförmigen Ausgangsspannung ($u_W$) eines NF/MF-Umrichters ist.

10. Anordnung nach Anspruch 8 oder 9,
    **dadurch gekennzeichnet,**
    **daß** ein zwischen den Kondensator ($C_1$) des Ankopplungsnetzwerkes und eine Übertragungsleitung geschalteter Transformators (TR) ein Übersetzungsverhältnis ($W_1/W_2$) aufweist, welches die Summe von Ersatzwiderständen ($R_{XN}$), die von den induktiven Aufnehmern ($IA_X$) bei der Aufnahme der Nennleistung in der Übertragungsleitung eingekoppelt werden, auf einen am Kondensator ($C_1$) wirksamen Wert ($IR_{XN}$), der gleich dem Schwingwiderstand

$\sqrt{(L1/C1)}$ des Ankopplungsnetzwerkes ist, übersetzt.

**11.** Anordnung nach einem der Ansprüche 8 bis 10,
**dadurch gekennzeichnet,**
**daß** das Ein- und Ausschalten eines steuerbaren Leistungshalbleiters (T1, T2, T3, T4) eines NF/MF-Umrichters durch eine Pulsdauermodulationsstufe (PM1) erfolgt, so daß eine pulsförmige Ausgangswechselspannung ($u_W$) mit variabler Pulsdauer ($T_D$) entsteht, und der Pulsdauermodulationsstufe ein Signal (SD) zum Einstellen der Pulsdauer ($T_D$) und damit des Effektivwertes ($U_1$) der Grundschwingung einer Ausgangswechselspannung ($u_W$) zugeführt ist.

**12.** Anordnung nach Anspruch 11,
**dadurch gekennzeichnet,**
**daß** ein Regler (KOR) vorhanden ist, welchem der Sollwert ($I_{LSOLL}$) des in die Übertragungsleitung einzuspeisenden Mittelfrequenz-Stromes und der Meßwert ($I_{LM}$) des tatsächlich eingespeisten Mittelfrequenz-Stromes ($I_L$) zugeführt sind, und daß der Regler eine Komponente (SDR) des die Pulsdauer ($T_D$) einstellenden Eingangssignals (SD) einer Pulsdauermodulationsstufe (PM1) bildet.

**13.** Anordnung nach einem der Ansprüche 6 bis 12,
**dadurch gekennzeichnet,**
**daß** zu der Übertragungsleitung ein Kondensator ($C_L$) in Reihe geschaltet und in seiner Kapazität so bemessen ist, daß er den an der Induktivität ($L_L$) der Übertragungsleitung auftretenden induktiven Spannungsabfall ($U_{LL}$) kompensiert.

**14.** Anordnung nach einem der Ansprüche 6 bis 13,
**dadurch gekennzeichnet,**
**daß** eine zweite Pulsdauer-Modulationsstufe (PM2) ein an ihr anliegendes Eingangssignal (EM) in ein einen zweiten steuerbaren Leistungshalbleiter zugeführtes pulsförmiges Signal (SB) in der Weise wandelt, daß das Verhältnis der Ausschaltzeit ($T_W$) des zweiten steuerbaren Leistungshalbleiters (TS) zur Zykluszeit ($T_Z$) dem Wert des Eingangssignals (EM) proportional ist und die Zykluszeit ($T_Z$) in der Größenordnung der halben Periodendauer ($T_M/2$) der Mittelfrequenz ($f_M$) liegt.

**15.** Anordnung nach Anspruch 14,
**dadurch gekennzeichnet,**
**daß** eine Spannungsreglerstüfe (RU), welche die Ausgangsspannung ($U_A$) eines Pufferkondensators ($C_P$) auf ihren Sollwert ($U_{ASOLL}$) regelt, vorhanden ist und eine Signalkomponente (EMU) des Eingangssignals (EM) der zweiten Pulsdauermodulationsstufe (PM2) zuführt und daß die Änderungsgeschwindigkeit der Signalkomponenten (EMU) durch die Kapazität des Pufferkondensators ($C_P$) und die Übertragungsfunktion (FU) der Spannungsreglerstufe (RU) so bemessen ist, daß die Signalkomponente (EMU) bei einer sprungförmigen Änderung des Ausgangsstromes ($I_A$) des Pufferkondensators erst nach der gegenüber der maximalen Einstellzeit ($T_S$) der Mittelfrequenz-Stromquelle länger dauern- den Einstellzeit ($T_A$) des Stromrichterstellgliedes ihren neuen Endwert erreicht.

**16.** Anordnung nach Anspruch 14 oder 15,
**dadurch gekennzeichnet,**
**daß** eine aktive Dämpfungsstufe (AD) eine weitere Signalkomponente (EMD) des Eingangssignals (EM) der zweiten Pulsdauermodulationsstufe (PM2) zur Dämpfung von Eigenschwingungen des Zwischenkreisstromes ($I_Z$) in der aus dem Parallelschwingkreis ($L_H''$, $C_K$) des induktiven Aufnehmers, einem Gleichrichter (G2) und einer Zwischenkreisinduktivität ($L_Z$) bestehenden schwingungsfähigen Teilschaltung zuführt.

**17.** Anordnung nach einem der Ansprüche 14 bis 16,
**dadurch gekennzeichnet,**
**daß** eine Strombeaufschaltungsstufe (SA) mit einer Verzögerungsstufe (VI) vorhanden ist, die der zweiten Pulsmodulationsstufe (PM2) eine Signalkomponente (EMA) des Eingangssignals (EM) zuführt, welche im stationären Zustand zum Verbraucherstrom ($I_A$) proportional und so bemessen ist, daß sie über die zweite Pulsmodulationsstufe (PM2) ein Verhältnis der Ausschaltzeit (Tw) des zweiten des steuerbaren Leistungshalbleiters zu einer Zykluszeit ($T_Z$) einstellt, bei dem die von der Übertragungsleitung aufgenommene Leistung ($P_L$) annähernd mit der Verbraucherleistung ($P_V$) übereinstimmt, und welche sprunghafte Änderungen des Verbraucherstromes ($I_A$) verzögert auf die Signalkomponente (EMA) überträgt, so daß die gegenüber der maximalen Einsteflzeit ($T_S$) der Mittelfrequenzstromquelle länger dauernde Einstellzeit ($T_A$) des Stromrichterstellgliedes eingehalten ist.

**18.** Anordnung nach einem der Anspruch 14 bis 17,
**dadurch gekennzeichnet,**
**daß** der zweiten Pulsdauermodulationsstufe (PM2) ein Synchronisationssignal (SY), das eine Synchronisationsstufe (SS) aus einem mittelfrequenten Eingangsstrom ($I_E$) oder einer Eingangsspannung ($U_E$) des Stromrichterstellgliedes generiert, zugeführt ist, welches die Bildung eines Ausgangssignals (SB) einer Pulsdauermodulationsstufe in der Weise beeinflußt, daß die Zykluszeit ($T_Z$) des Signals (SB) mit der Dauer einer Halbperiode ($T_M/2$) der Mittelfrequenz ($f_M$) genau übereinstimmt und die Ausschaltzeit (Tw) des zweiten steuerbaren Leistungshalbleiters (TS) etwa je zur Hälfte vor und hinter dem Scheitelwert der Ausgangsspannung ($u_B$) eines Gleichrichters (G2) liegt.

**Claims**

**1.** Method for inductive transmission of electric power from a medium-frequency current source with a frequency ($f_M$) to one or more mobile consumers via an extended transmission line and inductive transducers ($IA_X$, $IA_Y$) coordinated with the mobile consumers, with down-circuit rectifier actuators, and for adjusting the power ($P_{LX}$, $P_{LY}$) taken from the transmission line and fed to buffer memories to which the mobile consumers are connected, the transmission line being fed from a current source with a medium-frequency current ($I_L$) which is constant in its effective value during the power transmission, **characterized in that** the output voltage ($U_L$) of the medium-frequency current source is adjusted within a maximum adjustment time ($T_S$), which lasts only a few half-periods of the medium frequency ($f_M$), continuously to the value which corresponds to the variable power taken altogether from the transmission line, and **in that** the rectifier actuator connected between the buffer memory and the inductive power transducer (IA) of each mobile consumer adjusts the average consumer power ($P_L$) taken from the transmission line and fed to the buffer memory, within an adjustment time ($T_A$) which is greater than the maximum adjustment time ($T_S$) of the medium-frequency current source, continuously and with a limited speed of change.

**2.** Method according to Claim 1, **characterized in that** the information for continuous adjustment of the power ($P_L$) taken by the inductive transducer (IA) from the transmission line and fed to the buffer memory and the information for the speed of change of this power and hence also the information for realizing the adjustment time ($T_A$) of the rectifier actuator are contained in a signal (SB) controlling the rectifier actuator.

**3.** Method according to Claim 2, **characterized in that** the output voltage ($U_A$) of the buffer memory, which is fed to the mobile consumers, is regulated to a specified setpoint value ($U_{ASOLL}$) and the information contained in the control signal (SB) of the rectifier actuator and intended for adjustment of the power ($P_L$) taken from the transmission line and the speed of change thereof are given by the power ($P_v$) taken up by the consumer and the dimensioning of the time behaviour of this regulation.

**4.** Method according to any of Claims 1 to 3, **characterized in that** the effective value of the current ($I_L$) fed from the medium-frequency current source into the transmission line has a constant value during the power transmission to the mobile systems and is continuously controllable in time ranges in which no power or only a power which is small compared with the maximum transmittable power is transmitted, with a speed of change which is substantially below the permissible speed of change of the power taken from the transmission line.

**5.** Method according to any of Claims 1 to 4, **characterized in that** the effective value of the medium-frequency current ($I_L$) fed into the transmission line is regulated to a specified setpoint value ($I_{LSOLL}$) .

**6.** Arrangement for inductive transmission of electric power from a medium-frequency current source with a frequency ($f_M$) to one or more mobile consumers via an extended transmission line and inductive transducers ($IA_X$, $IA_Y$) assigned to the mobile consumers with down-circuit rectifier actuators, and for adjusting the power ($P_{LX}$, $P_{LY}$) taken from the transmission line and fed to buffer memories to which the mobile consumers are connected, the transmission line being fed from a current source with a medium-frequency current ($I_L$) which is constant in its effective value during the power transmission, **characterized in that** the arrangement has suitable means which result in the output voltage (UL) of the medium-frequency current source adjusting within a maximum adjustment time (Ts), which lasts only a few half-periods of the medium frequency (fM), continuously to the value which corresponds to the variable power taken altogether from the transmission line, and **in that** the rectifier actuator connected between the buffer memory and the inductive power transducer (IA) of each mobile consumer adjusts the mean consumer power (PL) taken from the transmission line and fed to the buffer memory, within an adjustment time (TA) which is greater than the maximum adjustment time (Ts) of the medium-frequency current source, continuously and with a limited speed of change.

7. Arrangement according to Claim 6, **characterized in that** the transmission line located between medium-frequency current source and consumer is in the form of a series resonant circuit for this medium frequency.

8. Arrangement according to Claim 6 or 7, **characterized in that** the arrangement comprises a low-frequency/medium frequency converter (LF/MF converter) having an intermediate circuit d.c. voltage ($U_G$) buffered by a capacitor ($C_G$) and an invertor (W) formed from controllable power semiconductors (T1, T2, T3, T4) and controlled by a frequency generator with the frequency ($F_M$) of the medium-frequency current source for generating a pulse-like output a.c. voltage ($u_W$) and a coupling network which is connected to the output a.c. voltage ($u_W$) of the converter and has a series resonant circuit formed by an inductance ($L_1$) and a capacitance ($C_1$), the resonant frequency of which

$$1/(2\pi\sqrt{L_1 C_1})$$ corresponds to the frequency ($f_M$) of the converter and in which the connections of the capacitor ($C_1$) are the outputs of the medium-frequency current source.

9. Arrangement according to Claim 8, **characterized in that** the inductance ($L_1$) and the capacitance ($C_1$) of the coupling network for achieving a transmittable rated power ($P_N$) are dimensioned according to the relationship

$$\sqrt{(L_1/C_1)} = U_{IN}^2/P_N,$$ where $U_{IN}$ is the effective rated voltage of the fundamental mode of the pulse-like output voltage ($u_W$) of an LF/MF converter.

10. Arrangement according to Claim 8 or 9, **characterized in that** a transformer (TR) connected between the capacitor ($C_1$) of the coupling network and a transmission line has a transformation ratio ($W_1/W_2$) which transforms the sum of equivalent resistances ($R_{XN}$), which are coupled in by inductive transducers ($IA_X$) on taking up the rated power in the transmission line, to a value ($ER_{XN}'$) which is effective at the capacitor ($C_1$) and is equal to the oscillating

resistance $$\sqrt{(L1/C1)}$$ of the coupling network.

11. Arrangement according to any of Claims 8 to 10, **characterized in that** the switching on and switching off of a controllable power semiconductor (T1, T2, T3, T4) of an LF/MF converter is effected by a pulse duration modulation stage (PM1) so that a pulse-like output a.c. voltage ($u_W$) having a variable pulse duration ($T_D$) forms and a signal (SD) for adjusting the pulse duration ($T_D$) and hence the effective value ($U_1$) of the fundamental mode of an output a.c. voltage ($u_W$) is fed to the pulse duration modulation stage.

12. Arrangement according to Claim 11, **characterized in that** a regulator (KOR) is present to which the setpoint value ($I_{LSOLL}$) of the medium-frequency current fed into the transmission line and the measured value ($I_{LM}$) of the medium-frequency current ($I_L$) actually fed in are supplied, and **in that** the regulator forms a component (SDR) of that input signal (SD) of a pulse duration modulation stage (BM1) which adjusts the pulse duration ($T_D$).

13. Arrangement according to any of Claims 6 to 12, **characterized in that** a capacitor ($C_L$) is connected in a series to the transmission line and is dimensioned in its capacitance so that it compensates the inductive voltage drop ($U_{LL}$) occurring at the inductance ($L_L$) of the transmission line.

14. Arrangement according to any of Claims 6 to 13, **characterized in that** a second pulse duration modulation stage (PM2) converts an input signal (EM) present at it into a pulse-like signal (SP) fed to a second controllable power semiconductor, in such a way that the ratio of the switching off time ($T_w$) of the second controllable power semiconductor (TS) to the cycle time ($T_Z$) is proportional to the value of the input signal (EM) and the cycle time ($T_Z$) is of the order of magnitude of half the cycle duration ($T_M/2$) of the medium frequency ($f_M$).

15. Arrangement according to Claim 14, **characterized in that** a voltage control stage (RU) which regulates the output voltage ($U_A$) of a buffer capacitor ($C_P$) to its setpoint value ($U_{ASOLL}$) is present and feeds a signal component (EMU) of the input signal (EM) to the second pulse duration modulation stage (PM2) and **in that** the speed of change of the signal components (EMU) is dimensioned by the capacitance of the buffer capacitor ($C_P$) and the transmission function (FU) of the voltage control stage (RU) in such a way that, in the case of an abrupt change of the output current ($I_A$) of the buffer capacitor, the signal component (EMU) reaches its new end value only after the adjustment time ($T_A$) of the rectifier actuator, which adjustment time is longer compared with the maximum adjustment time ($T_S$) of the medium-frequency current source.

**16.** Arrangement according to Claim 14 or 15, **characterized in that** an active attenuation stage (AD) feeds a further signal component (EMD) of the input signal (EM) to the second pulse duration modulation stage (PM2) for attenuating natural oscillations of the intermediate circuit current ($I_Z$) in the oscillatable part-circuit consisting of the parallel resonant circuit ($L_H''$, $C_K$) of the inductive transducer, a rectifier (G2) and an intermediate circuit inductance ($L_Z$).

**17.** Arrangement according to any of Claims 14 to 16, **characterized in that** a current application stage (SA) with a delay stage (VI) is present, which feeds to the second pulse modulation stage (PM2) a signal component (EMA) of the input signal (EM), which signal component in the steady state is proportional to the consumer current and is dimensioned so that, via the second pulse modulation stage (PM2), it establishes a ratio of the switching off time ($T_W$) of the second controllable power semiconductor to a cycle time ($T_Z$) in which the power ($P_L$) taken from the transmission line corresponds approximately to the consumer power ($P_V$), and which transmits abrupt changes of the consumer current ($I_A$) with a delay to the signal component (EMA) so that the adjustment time ($T_A$) of the rectifier actuator which is longer compared with the maximum adjustment time ($T_S$) of the medium-frequency current source is maintained.

**18.** Arrangement according to any of Claims 14 to 17, **characterized in that** a synchronization signal (SY) which is generated by a synchronization stage (SS) from a medium-frequency input current ($I_E$) or an input voltage ($U_E$) of the rectifier actuator is fed to the second pulse duration modulation stage (PM2), which synchronization signal (SY) influences the formation of an output signal (SB) of a pulse duration modulation stage in such a way that the cycle time ($T_Z$) of the signal (SB) corresponds exactly to the duration of a half-period (($T_L/2$) of the medium frequency ($f_M$) and the switching off time ($T_W$) of the second controllable power semiconductor (TS) is approximately half before and half behind the peak value of the output voltage ($u_B$) of a rectifier (G2).

**Revendications**

**1.** Procédé destiné à la transmission inductive d'une puissance électrique depuis une source de courant à moyenne fréquence de fréquence ($f_M$) vers un ou plusieurs consommateurs mobiles par l'intermédiaire d'une ligne de transmission très longue et de capteurs inductifs ($IA_x$, $IA_y$) associés aux consommateurs mobiles avec des organes de réglage de convertisseur de courant montés en aval, et destiné aussi au réglage de la puissance ($P_{LX}$, $P_{LY}$) captée sur la ligne de transmission et acheminée vers des mémoires tampons auxquelles sont raccordés les consommateurs mobiles, la ligne de transmission étant alimentée par une source de courant avec un courant de moyenne fréquence ($I_L$) de valeur efficace constante pendant la transmission de puissance, **caractérisé en ce que**, au cours d'un temps de réglage maximal ($T_S$) qui ne dure que quelques demi-périodes de la fréquence moyenne ($f_M$), la tension de sortie ($U_L$) de la source de courant de moyenne fréquence se règle progressivement sur la valeur qui correspond à la puissance variable totale prélevée sur la ligne de transmission et **en ce que** l'organe de réglage de convertisseur de courant branché entre la mémoire tampon et le capteur inductif (IA) de chaque consommateur mobile règle progressivement et à vitesse de modification limitée la puissance de consommateur ($P_L$) moyenne prélevée sur la ligne de transmission et acheminée vers la mémoire tampon au cours d'un temps de réglage ($T_A$) qui est supérieur au temps de réglage maximal ($T_S$) de la source de courant à moyenne fréquence.

**2.** Procédé selon la revendication 1, **caractérisé en ce que** l'information destinée au réglage progressif de la puissance ($P_L$) captée sur la ligne de transmission par le capteur inductif (IA) et acheminée vers la mémoire tampon ainsi que l'information relative à la vitesse de modification de cette puissance et donc également l'information concernant la réalisation du temps de réglage ($T_A$) de l'organe de réglage de convertisseur de courant sont incluses dans un signal (SB) commandant l'organe de réglage de convertisseur de courant.

**3.** Procédé selon la revendication 2, **caractérisé en ce que** la tension de sortie ($U_A$) de la mémoire tampon acheminée vers les consommateurs mobiles est réglée sur une valeur théorique prédéterminée ($U_{ASOLL}$) et **en ce que** les informations relatives au réglage de la puissance ($P_L$) prélevée sur la ligne de transmission ainsi que de sa vitesse de modification incluses dans le signal de commande (SB) de l'organe de réglage de convertisseur de courant sont données par la puissance ($P_V$) absorbée par le consommateur et le dimensionnement de la fonction de transfert de cette régulation.

**4.** Procédé selon l'une des revendications 1 à 3, **caractérisé en ce que** la valeur efficace du courant (IL) introduit dans la ligne de transmission par la source de courant à moyenne fréquence présente une valeur constante pendant la transmission de puissance sur les systèmes mobiles et, dans les laps de temps où il n'est transmis aucune puissance ou seulement une faible puissance comparée à la puissance maximale transmissible, elle peut être commandée de façon progressive avec une vitesse de modification qui est essentiellement inférieure à la vitesse de modification autorisée de la puissance pouvant être captée sur la ligne de transmission.

5. Procédé selon l'une des revendications 1 à 4, **caractérisé en ce que** la valeur efficace du courant à moyenne fréquence (IL) introduit dans la ligne de transmission est réglée sur une valeur théorique prédéterminée ($I_{LSOLL}$).

6. Agencement destiné à la transmission inductive d'une puissance électrique depuis une source à moyenne fréquence de fréquence ($f_M$) vers un ou plusieurs consommateurs mobiles par l'intermédiaire d'une ligne de transmission très longue et de capteurs inductifs ($IA_X$, $IA_Y$) associés aux consommateurs mobiles avec des organes de réglage de convertisseur de courant branchés en aval et destiné aussi au réglage de la puissance ($P_{LX}$, $P_{LY}$) captée sur la ligne de transmission et acheminée vers des mémoires tampons auxquelles sont raccordés les consommateurs mobiles, la ligne de transmission étant alimentée par une source de courant avec un courant à moyenne fréquence (IL) de valeur efficace constante pendant la transmission de puissance, **caractérisé en ce que** l'agencement présente des dispositifs adéquats qui font que la tension de sortie (UL) de la source de courant à moyenne fréquence se règle progressivement au cours d'un temps de réglage maximal (Ts) qui ne dure que quelques demi-périodes de la fréquence moyenne (fM) sur la valeur qui correspond à la puissance variable totale prélevée sur la ligne de transmission et **en ce que** l'organe de réglage de convertisseur de courant branché entre la mémoire tampon et le capteur de puissance inductif (IA) de chaque consommateur mobile règle progressivement et avec une vitesse de modification limitée la puissance de consommateur (PL) moyenne prélevée sur la ligne de transmission et acheminée vers la mémoire tampon au cours d'un temps de réglage (TA) qui est supérieur au temps de réglage maximal (Ts) de la source de courant à moyenne fréquence.

7. Agencement selon la revendication 6, **caractérisé en ce que** la ligne de transmission située entre la source de courant à moyenne fréquence et le consommateur est réalisée sous la forme d'un circuit oscillant en série pour cette moyenne fréquence.

8. Agencement selon les revendications 6 ou 7, **caractérisé en ce que** l'agencement comporte un convertisseur basse fréquence-moyenne fréquence (convertisseur BF/MF) avec une tension continue de circuit intermédiaire ($U_G$) tamponnée par un condensateur ($C_G$) et un onduleur (W) formé de semi-conducteurs de puissance réglables (T1, T2, T3, T4) et commandé par un générateur de fréquence avec la fréquence ($f_M$) de la source de courant à moyenne fréquence destiné à produire une tension alternative de sortie ($u_W$) sous forme d'impulsions ainsi qu'un réseau d'accouplement raccordé à la tension alternative de sortie ($u_W$) du convertisseur, lequel réseau d'accouplement présente un circuit oscillant en série formé par une inductance ($L_1$) et une capacité ($C_1$), dont la fréquence de résonance $1/(2\pi\sqrt{L_1 C_1})$ coïncide avec la fréquence ($f_M$) du convertisseur et dans lequel les bornes du condensateur ($C_1$) sont les sorties de la source de courant à moyenne fréquence.

9. Agencement selon la revendication 8, **caractérisé en ce que** l'inductance ($L_1$) et la capacité ($C_1$) du réseau d'accouplement sont calculées selon la relation $\sqrt{L_1/C_1} \approx U_{IN}^2/P_N$ afin d'atteindre une puissance nominale transmissible ($P_N$), $U_{IN}$ étant la tension nominale efficace de l'oscillation fondamentale de la tension de sortie sous forme d'impulsions ($u_W$) d'un convertisseur BF/MF.

10. Agencement selon les revendications 8 ou 9, **caractérisé en ce qu'**un transformateur (TR) branché entre le condensateur ($C_1$) du réseau d'accouplement et une ligne de transmission présente un rapport de transformation ($W_1/W_2$), lequel transforme la somme de résistances équivalentes ($R_{XN}$) alimentées par les capteurs inductifs ($IA_x$) lors de l'absorption de la puissance nominale dans la ligne de transmission en une valeur ($ER_{XN}$) agissant sur le condensateur ($C_1$), laquelle est égale à la résistance oscillatoire $\sqrt{L_1/C_1}$ du réseau d'accouplement.

11. Agencement selon l'une des revendications 8 à 10, **caractérisé en ce que** la connexion et la déconnexion d'un semi-conducteur de puissance réglable (T1, T2, T3, T4) d'un convertisseur BF/MF a lieu par le biais d'un étage de modulation d'impulsions en durée (PM1) de manière à créer une tension alternative de sortie ($u_W$) sous forme d'impulsions à durée d'impulsion variable ($T_D$) et **en ce qu'**un signal (SD) destiné à régler la durée d'impulsion ($T_D$) et ainsi la valeur effective ($U_1$) de l'oscillation fondamentale d'une tension alternative de sortie ($u_W$) est acheminé vers l'étage de modulation d'impulsions en durée.

12. Agencement selon la revendication 11, **caractérisé par** la présence d'un régulateur (KOR) auquel sont acheminées la valeur théorique ($I_{LSOLL}$) du courant à moyenne fréquence alimentant la ligne de transmission et la valeur de mesure ($I_{LM}$) du courant à moyenne fréquence ($I_L$) effectivement arrivé et en ce que le régulateur forme une composante (SDR) du signal d'entrée (SD) réglant la durée d'impulsion ($T_D$) d'un étage de modulation d'impulsions en durée (PM1).

**13.** Agencement selon l'une des revendications 6 à 12, **caractérisé en ce qu'**un condensateur (C$_L$) est branché en série vers la ligne de transmission et **en ce que** sa capacité est calculée de manière à compenser la chute de tension inductive (U$_{LL}$) se produisant au niveau de l'inductance (L$_L$) de la ligne de transmission.

**14.** Agencement selon l'une des revendications 6 à 13, **caractérisé en ce qu'**un second étage de modulation d'impulsions en durée (PM2) transforme un signal d'entrée (EM) présent à son niveau en un signal sous forme d'impulsions (SB) acheminé vers un second semi-conducteur de puissance réglable de telle façon que le rapport entre le temps de coupure (T$_W$) du second semi-conducteur de puissance réglable (TS) et le temps de cycle (T$_Z$) soit proportionnel à la valeur du signal d'entrée (EM) et que le temps de cycle (T$_Z$) soit de l'ordre de la durée d'une demi-période (T$_M$/2) de la fréquence moyenne (f$_M$).

**15.** Agencement selon la revendication 14, **caractérisé par** la présence d'un étage de régulation de tension (RU), lequel règle la tension de sortie (U$_A$) d'un condensateur tampon (C$_P$) à sa valeur théorique (U$_{ASOLL}$) et achemine une composante de signal (EMU) du signal d'entrée (EM) vers le second étage de modulation d'impulsions en durée (PM2) et en ce que la vitesse de modification des composantes de signal (EMU) est déterminée par la capacité du condensateur tampon (C$_P$) et la fonction de transmission (FU) de l'étage de régulation de tension (RU) de telle manière que la composante de signal (EMU), en cas de modification par à-coups du courant de sortie (I$_A$) du condensateur tampon, n'atteigne sa nouvelle valeur finale qu'après le temps de réglage (T$_A$) de l'organe de réglage de convertisseur, lequel est plus long que le temps de réglage maximal (T$_S$) de la source de courant à moyenne fréquence.

**16.** Agencement selon les revendications 14 ou 15, **caractérisé en ce qu'**un étage d'atténuation actif (AD) achemine une autre composante de signal (EMD) du signal d'entrée (EM) vers le second étage de modulation d'impulsions en durée (PM2) pour l'atténuation des oscillations propres du courant de circuit intermédiaire (I$_Z$) dans le montage partiel vibrant constitué par le circuit oscillant parallèle (L$_H$", C$_K$) du capteur inductif, un redresseur (G2) et une inductance de circuit intermédiaire (L$_Z$).

**17.** Agencement selon l'une des revendications 14 à 16, **caractérisé par** la présence d'un étage de reprise de courant (SA) avec un étage de temporisation (VI) qui achemine vers le second étage de modulation d'impulsions (PM2) une composante de signal (EMA) du signal d'entrée (EM), laquelle est proportionnelle au courant de consommateur (I$_A$) à l'état stationnaire, et qui est dimensionné de manière à régler par l'intermédiaire du second étage de modulation d'impulsions (PM2) un rapport entre le temps de coupure (T$_W$) du second semi-conducteur de puissance réglable et un temps de cycle (T$_Z$) avec lequel la puissance (P$_L$) captée sur la ligne de transmission coïncide presque avec la puissance de consommateur (P$_V$) et lequel étage de reprise de courant transmet les variations par à-coups du courant de consommateur (I$_A$) de manière temporisée à la composante de signal (EMA) de manière à maintenir le temps de réglage (T$_A$) de l'organe de réglage de convertisseur qui est plus long que le temps de réglage maximal (T$_S$) de la source de courant à moyenne fréquence.

**18.** Agencement selon l'une des revendications 14 à 17, **caractérisé en ce qu'**il est acheminé vers le second étage de modulation d'impulsions en durée (PM2) un signal de synchronisation (SY) qui génère un étage de synchronisation (SS) à partir d'un courant d'entrée à moyenne fréquence (I$_E$) ou d'une tension d'entrée (U$_E$) de l'organe de réglage de convertisseur, lequel signal de synchronisation influe sur la formation d'un signal de sortie (SB) d'un étage de modulation d'impulsions en durée de telle façon que le temps de cycle (T$_Z$) du signal (SB) coïncide parfaitement avec la durée d'une demi-période (T$_M$/2) de la moyenne fréquence (f$_M$) et que le temps de coupure (T$_W$) du second semi-conducteur de puissance réglable (TS) soit à chaque fois à peu près situé au milieu, avant et après la valeur de crête de la tension de sortie (UB) d'un redresseur (G2).

ÜBERTRAGUNGSLEITUNG

NETZ 400V

NF— / MF— UMRICHTER fM

UW

ANKOPP-LUNGS-NETZWERK

UL

CL

I L

IAX

$\Phi_L$

$\Phi_{HX}$

$\Phi_L$

IAY

$\Phi_{HY}$

I LM

EINSTELLZEIT Ts

I LSOLL

SCHNELLEINSTELLENDE MITTELFREQUENZ—STROMQUELLE

$U_{HX}''$

CKX

$U_{HY}''$

CKY

EINSTELL-ZEIT TA

REGELUNG

SB

I Z

STROM-RICHTER-STELLGLIED

PUFFER-SPEICHER

I A

UA

− +

UA SOLL

VERBRAUCHER X

EINSTELL-ZEIT TA

REGELUNG

SB

I Z

STROM-RICHTER-STELLGLIED

PUFFER-SPEICHER

I A

UA

− +

UA SOLL

VERBRAUCHER Y

Fig.1

BEWEGTES SYSTEM X

BEWEGTES SYSTEM Y

EP 0 968 559 B1

Fig.2a

Fig.2b

Fig.2c

Fig.3

Fig.4

Fig.5a

$$Z=R=\sqrt{\frac{L_1}{C_1}}$$

$$\varphi_1 = 45°$$

Fig.5b

$$Z=0$$

Fig.5c

Fig.6a

Fig.6b

EP 0 968 559 B1

Fig.7a

Fig.7b

**EP 0 968 559 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9620526 A1
- DE 4446779

- WO 9217929 A1
- DE 4446779 C2

**In der Beschreibung aufgeführte Nicht-Patentliteratur**

- **A. W. Green ; T. Boys.** *Power Electronics and Variable-Speed Drives,* 26. Oktober 1994, 694-698